# EUROPÄISCHE PATENTANMELDUNG

(11) **EP 1 229 465 A1**
(43) Veröffentlichungstag der Anmeldung: **07.08.2002**
(21) Anmeldenummer: 01102211.8
(22) Anmeldetag: 31.01.2001
(51) Int. Cl.: G06F 17/60, H04Q 7/22

(54) **Verfahren zur automatischen Erzeugung und Übermittlung von Nachrichten**

(71) Anmelder: World of Friends GmbH, 47495 Rheinberg (DE)
(72) Erfinder: Kespret, Istok, 47495 Rheinberg (DE)
(74) Vertreter: Freischem, Stephan, Dipl.-Ing.

(57) **Zusammenfassung**

Die Erfindung betrifft ein Kontaktvermittlungsverfahren, bei dem durch einen Steuerungscomputer automatisch Nachrichten erzeugt und übermittelt werden. Dabei werden in einer Profildatenbank gespeicherte Personenprofile der an dem Verfahren beteiligten Personen verwendet.

Um die Nachrichtenübertragung an außerhalb ihrer Wohnung befindliche Personen zu ermöglichen und die Vermittlung auf Personen zu beschränken, die sich nahe beieinander befinden, werden folgende Schritte vorgeschlagen:
- Übermittlung der Aufenthaltsorts-Angaben der Personen an den Steuerungscomputer;
- Abspeichern der Ortsangaben zusammen mit dem jeweiligen Personenprofil;
- Übermittlung einer Kontaktanfrage-Nachricht von einem mobilen Kommunikationsgerät an den Steuerungscomputer unter Angabe des Ortes der Kontaktaufnahme;
- Vergleich des Personenprofils mit den abgespeicherten Personenprofilen und/oder der den Personen zugeordneten Ortsangaben;
- Auswahl mehrerer Personen bei Übereinstimmung der Personenprofile und/oder Ortsangaben;
- Erzeugung einer Nachricht mit Informationen über die Personenprofile der ausgewählten Personen durch den Steuerungscomputer;
- Übermittlung dieser Nachricht von dem Steuerungscomputer an das Kommunikationsgerät der anfragenden Person.

Vorzugsweise sind die Nachrichten SMS-Nachrichten, welche von Mobiltelefonen gesendet und empfangen werden.

## Beschreibung

Die Erfindung betrifft ein Verfahren zur automatischen Erzeugung und Übermittlung von Nachrichten durch einen Steuerungscomputer, welches die folgenden Schritte aufweist:
- Aufnahme eines Personenprofils für jede an dem Verfahren beteiligte Person,
- Abspeichern der Personenprofile in einer Profildatenbank auf einem Speichermedium des Steuerungscomputers,
   und insbesondere auf ein automatisch arbeitendes System zur Kontaktvermittlung gerichtet ist.

Bisher bekannte Kontaktvermittlungs-Systeme sind insbesondere als Internet-Portal ausgebildet und auf einem Web-Server als Steuerungscomputer installiert. Sie verfügen über eine große Speichereinheit (insbesondere Festplatte) zur Abspeicherung einer Profildatenbank mit den Personenprofilen der an dem Kontaktvermittlungs-Programm teilnehmenden Personen. Die Personenprofile werden einem bestimmten Identifikationscode zugeordnet, der in der Regel auch der Kontaktadresse der entsprechenden Person auf dem Internet-Portal entspricht. Der Identifikationscode ist in der Regel ein von den einzelnen Personen gewähltes Pseudonym, welches entweder einem Vornamen entspricht oder ein beliebig wählbarer Phantasiebegriff ist.

Diese Internet-Sites erfreuen sich zunehmender Beliebtheit. Personen, die an dem Kontaktvermittlungs-Programm teilnehmen, können Kontaktanfragen aufgeben. Bei einer Kontaktanfrage wird auf dem Steuerungscomputer ein Vergleich mit den Profilen in der Profildatenbank durchgeführt und übereinstimmende Profile übermittelt. Die übermittelten Profile sind in der Regel anonymisiert, d.h. sie beinhalten nicht die tatsächlichen Personendaten sondern nur die Angabe des Pseudonyms. Die Profile werden meist als HTML-Datei von dem Steuerungscomputer (Web-Server) an den PC des Anfragenden übermittelt. Der Anfragende kann dann anhand der empfangenen Profile entscheiden, mit welchem Pseudonym er über das Kontaktvermittlungs-Portal in Kontakt treten will. In der Regel sendet der anfragende Benutzer eine E-mail an das Kontaktvermittlungs-Portal, welche an die E-mail-Adresse des gewünschten Empfängers weitergeleitet wird.

Der Nachteil der bekannten Kontaktvermittlungs-Portale, auch Dating-Sites genannt, liegt zum einen darin, daß sie nur über Internetcomputer genutzt werden können. In der Regel haben die Nutzer in ihrem Heim oder auf der Arbeitsstätte einen Internetzugang. Wenn sich die Benutzer dieses Systems außer Hause befinden und beispielsweise am Wochenende in Clubs oder Diskotheken gehen, haben sie keinen Zugriff auf die Dienstleistungen des Dating-Sites. Zudem übermitteln die Dating-Sites Profile von Personen, ohne deren Aufenthaltsort zu kennen. Eine Kontaktaufnahme, die durch Hinund Hersenden mehrerer E-mails längere Zeit dauern kann, kann dazu führen, daß Personen miteinander in Kontakt treten, die sehr weit voneinander entfernt und nur durch das Internet miteinander verbunden sind.

Auch ist bekannt, daß Personen über virtuelle Dialogräume, sogenannte Chat-Rooms, miteinander in Verbindung treten, in denen die Textnachrichten eingelogter Personen jeweils auf die Computer der weiteren eingelogten Personen übermittelt werden. Hier kommunizieren jedoch nur rein zufällig zusammentreffende Personen miteinander, ohne daß die Übereinstimmung von Personenprofilen überprüft wurde. Auch hier ist eine örtliche Nähe der miteinander kommunizierenden Personen nicht gewährleistet. Eine persönliche Kontaktaufnahme zwischen über das Internet miteinander kommunizierenden Personen an einem Ort ist in der Regel nur nach längeren Reisen möglich.

Aufgabe der Erfindung ist es, ein Verfahren zur automatischen Erzeugung und Übermittlung von Nachrichten zu schaffen, welches auf bequeme und schnelle Weise die persönliche Kontaktaufnahme zwischen zwei Personen ermöglicht.

Diese Aufgabe wird durch die folgenden Schritte gelöst:
- Übermittlung der Aufenthaltsorts-Angaben der an dem Verfahren beteiligten Personen an den Steuerungscomputer;
- Abspeichern der Ortsangaben in Verbindung mit dem jeweiligen Personenprofil auf einem Speichermedium des Steuerungscomputers;
- Übermittlung einer Kontaktanfrage-Nachricht von einem mobilen Kommunikationsgerät einer anfragenden Person an den Steuerungscomputer unter gleichzeitiger Angabe des Ortes der gewünschten Kontaktaufnahme;
- Vergleich des Personenprofils der anfragenden Person mit den abgespeicherten Personenprofilen und/oder des Kontaktaufnahme-Ortes mit den abgespeicherten Aufenthaltsorts-Angaben;
- Auswahl einer Anzahl von an dem Verfahren beteiligten Personen aus der Profildatenbank bei Übereinstimmung der Personenprofile und/oder Ortsangaben;
- Erzeugung einer Nachricht mit Informationen über die Personenprofile der ausgewählten Personen durch den Steuerungscomputer und
- Übermittlung dieser Nachricht von dem Steuerungscomputer an das Kommunikationsgerät der anfragenden Person.

Im wesentlichen führt das Verfahren dazu, daß örtlich sehr nahe beieinander befindliche Personen, die ihre aktive Teilnahme an dem Kommunikationsverfahren dem Steuerungscomputer angezeigt haben, miteinander in Kontakt treten können. Die Nutzung des Verfahrens ist örtlich unbeschränkt, da mobile Kommunikationsgeräte, insbesondere Mobiltelefone, verwendet werden. Eine persönliche Kontaktaufnahme ist unproblematisch aufgrund des geringen räumlichen Abstands zwischen den miteinander kommunizierenden Personen. Vorzugsweise werden nur Personen ausgewählt, die ihre aktive Teilnahme an dem Verfahren angezeigt haben. So wird kein Kontakt zu Personen vermittelt, die nicht für eine direkte Kontaktaufnahme zur Verfügung stehen. Hierdurch erhöhen sich der Erfolgsaussichten der Kontaktaufnahme zu einer ausgewählten Person.

Bei der Durchführung des Verfahrens kann jede an dem Verfahren teilnehmende Person entweder ihren aktuellen Aufenthaltsort übermitteln oder den Aufenthaltsort, an dem sie ihren Abend verbringen wird. Es ist davon auszugehen, daß das Kontaktvermittlungsverfahren vorwiegend abends genutzt wird, wenn die Benutzer dieses Verfahrens ausgehen. Beispielsweise kann man schon die aktive Teilnahme an dem Verfahren dem Steuerungsrechner durch Übermittlung des Aufenthaltsorts, den man in Kürze aufsuchen will, anzeigen, bevor man die Wohnung verläßt.

Auch die Kontaktanfrage kann von der anfragenden Person entweder in Verbindung mit dem aktuellen Ort, an dem sich diese Person befindet, oder mit einem anderen Ort an den Steuerungscomputer übermittelt werden, den die anfragende Person in Kürze aufsuchen wird und an dem die Kontaktaufnahme erwünscht ist.

Nach dem Empfang der Kontaktanfrage-Nachricht vergleicht der Steuerungscomputer das Personenprofil der anfragenden Person und/oder den Ort der gewünschten Kontaktaufnahme mit den abgespeicherten Personenprofilen und den hierzu zugeordneten Aufenthaltsortsangaben. Wenn in der Nähe des Kontaktaufnahme-Ortes keine Personen mit übereinstimmendem Personenprofil ermittelt werden können, ist es auch möglich, allein einen Ortsvergleich für die Auswahl bestimmter Personen durchzuführen. Auch wenn das erfindungsgemäße Verfahren beschränkt auf einen Kreis von Personen eingerichtet wir, die mit beliebigen Personen dieses Personenkreises in Kontakt treten möchten, kann der Schritt des Profilvergleichs ausfallen und allein ein Ortsvergleich durchgeführt werden. Im allgemeinen werden jedoch zur Auswahl bestimmter Personen einzelne Merkmale der Personenprofile miteinander verglichen. Beispielsweise wird das gesuchte Geschlecht, welches in dem Profil der anfragenden Personen eingetragen ist, mit dem Geschlecht einer ggf. auszuwählenden Person, welches in deren Personenprofil eingetragen ist, verglichen.

Bei hinreichender Übereinstimmung der Personenprofile und der Ortsangaben wird ein Profil aus der Profildatenbank ausgewählt. Dabei kann das Maß der Übereinstimmung sowie die örtliche Nähe der verglichenen Ortsangaben zur Berechnung eines Übereinstimmungsindex verwendet werden, der zur Erstellung einer Rangordnung der ausgewählten Personen verwendet werden kann.

Nach dem Vergleich erzeugt der Steuerungscomputer automatisch eine erste Nachricht mit Informationen über die ausgewählten Personen. Zum Beispiel kann zunächst die Anzahl der ausgewählten Personen in die Nachricht aufgenommen und zurück an das mobile Kommunikationsgerät der anfragenden Person übermittelt werden.

Das Ergebnis der Kontaktanfrage ist somit eine Nachricht an die anfragende Person, wie viele Personen mit übereinstimmendem Profil zur Zeit aktiv an dem Vermittlungsverfahren teilnehmen und sich in unmittelbarer Nähe befinden. Sollten nur eine oder zwei Personen aufgefunden werden, die diese Kriterien erfüllen, können direkt mit der Angabe der Anzahl der ausgewählten Personen deren Personenprofile zumindest in Auszügen an den Anfragenden gesendet werden.

Wenn mehrere Profile aufgefunden werden, können diese nach einem Abfragebefehl, der durch den Anfragenden an den Steuerungscomputer über das Kommunikationsgerät gesendet wurde, in Nachrichten zusammengefaßt und an den Anfragenden übermittelt werden. Dabei können die Profile - wie erwähnt - in absteigender Reihenfolge ihres Übereinstimmungsindex in eine Nachricht geschrieben werden oder nacheinander als einzelne Nachrichten an die anfragende Person übermittelt werden. Alternativ können die Profile in aufsteigender Reihenfolge der Entfernung geordnet werden, die zwischen dem Kontaktaufnahme-Ort und dem jeweiligen Aufenthaltsort der ausgewählten Person liegt.

Bei einer Ausführungsvariante kann der anfragenden Person ermöglicht werden, die Übermittlung der Personenprofile zu beliebigen Zeiten unterbrechen. Sie kann an den Steuerungscomputer unter Angabe des Pseudonyms, d.h. des Indentifikationscodes, einer der ausgewählten Personen eine Nachricht senden, welche dann an das Kommunikationsgerät dieser ausgewählten Person weitergeleitet wird. Die anfragende Person und die bestimmte ausgewählte Person können nun jeweils unter Angabe des Pseudonyms der jeweils anderen Person Nachrichten an den Steuerungscomputer schicken, der diese Nachrichten an die jeweils andere Person weiterleitet.

Auf Wunsch kann eine der beiden Personen ihre Anonymität fallenlassen und beispielsweise die direkte Kontaktaufnahme mit ihrem Kommunikationsgerät, im Falle eines Mobiltelefons durch Angabe der Telefonnummer, ermöglichen.

Das erfindungsgemäße Kommunikationsverfahren vereinigt die Vorzüge der Internet-Kontaktvermittlungsportale mit den Vorzügen von Kontaktvermittlungsveranstaltungen, die von Singles besucht werden. Wie im Internet ist zunächst bei der Kontaktaufnahme eine anonyme Kommunikation möglich. Die Personen kommunizieren grundsätzlich mit dem Steuerungscomputer und sprechen nur ein ihnen unbekanntes Pseudonym an.

Zum anderen kann in kürzester Zeit, falls sich die Kommunikation vorteilhaft entwickelt, eine persönliche Kontaktaufnahme erfolgen. Eine der beiden miteinander kommunizierenden Personen braucht lediglich ihre Anonymität fallenzulassen. Sollte sich die Kommunikation nicht vorteilhaft entwickeln, kann jede Person zu beliebigen Zeitpunkten die Kommunikation abbrechen.

Das Nachrichtensystem, welches sich insbesondere für das erfindungsgemäße Verfahren eignet, ist das in digitalen Telefonnetzen etablierte System zur Übertragung kurzer Textnachrichten, welches als SMS oder Short Message Service bekannt ist. Die Textnachrichten eignen sich besonders für dieses automatisch durch den Steuerungscomputer durchgeführte Verfahren, da die SMS-Texte durch digitalisierte Buchstaben gebildet werden und somit computerlesbare Steuerungsbefehle enthalten können.

Das Verfahren wird insbesondere von jungen Teilnehmern intensiv genutzt werden, die das relativ kostengünstige SMS-System heute schon als wesentliches Kommunikationssystem akzeptiert haben. Bei Kosten für eine SMS-Nachricht, die sich in der Regel auf einen Bruchteil der Kosten für ein einminütiges Telefongespräch belaufen, werden die Kosten für etwa 10 bis 20 anfallende Nachrichten bei einer Kontaktaufnahme nicht zu hoch liegen. Eine Teilnahmegebühr, die der Betreiber des Steuerungscomputers berechnet, kann entfallen. Der Betreiber des Steuerungscomputers kann eine vertragliche Regelung mit den Betreibern der SMS-Systeme treffen, die ihm einen Anteil an den Einnahmen durch die SMS-Gebühren sichert.

Das System ist aber auch in Verbindung mit anderen Nachrichtenformen möglich. Beispielsweise können moderne Handys mit Internetanschluß (WAP) auch E-mails versenden, so daß das erfindungsgemäße Verfahren auch zur E-mail-Vermittlung verwendet werden kann. Entscheidend ist, daß für die Kontaktaufnahme und somit für die aktive Teilnahme an dem Verfahren mobile Kommunikationsgeräte verwendet werden, so daß die teilnehmenden Personen von ihrem Heim ungebunden sind und sich an interessanten Veranstaltungsstätten aufhalten können. Unter Anwendung zukünftiger Kommunikationsnetze, z.B. UMTS (Universal Mobile Telecommunication Standard) können auch beliebige andere Nachrichtenformen verwendet werden. Beispielsweise können die Personenprofile Bilder enthalten, die als digitale Datei auf das mobile Kommunikationsgerät übermittelt werden.

Schließlich ist es auch möglich, das erfindungsgemäße Verfahren mit Sprachnachrichten durchzuführen. Allerdings muß hierfür ein aufwendiges Sprachanalyseprogramm auf dem Steuerungscomputer installiert werden, der die verschiedenen Befehle der Teilnehmer an dem Verfahren durch Analyse des gesprochenen Wortes ermitteln kann.

Wie erwähnt, werden bevorzugt Mobiltelefone zur Durchführung des erfindungsgemäßen Verfahrens verwendet. Derartige Mobiltelefone übermitteln Signale über Funknetze, welche in verschiedene lokale Zellen aufgeteilt sind. Innerhalb des Funknetzes ist diejenige Zelle, innerhalb der sich das von einer Person verwendete Mobiltelefon befindet, bekannt. Dieser bekannte Ort der Funkzelle, in der sich ein Mobiltelefon befindet, kann als Kontaktaufnahme-Ort mit der Kontaktanfrage-Nachricht an den Steuerungscomputer übermittelt werden. In diesem Fall ist es nicht erforderlich, daß eine anfragende Person manuell eine Ortsangabe eingibt.

In der Regel verwenden alle an dem Verfahren beteiligten Personen gleichartige Kommunikationsgeräte, vorzugsweise Mobiltelefone, die zum Empfang und zum Versenden von SMS-Nachrichten geeignet sind. Nicht nur als Kontaktaufnahme-Ort der anfragenden Person, sondern auch als Aufenthaltsort aller an dem Verfahren teilnehmenden Personen können die jeweiligen Ortsinformationen der Funkzellen verwendet werden, in denen sich die Mobiltelefone der an dem Verfahren beteiligten Personen befinden. Bei entsprechender Kooperation des Betreibers des Steuerungscomputers mit dem Betreiber eines Funknetzes können die Aufenthaltsdaten der Mobiltelefone aller an dem Verfahren beteiligten Personen jeweils bei einer Änderung der Funkzelle, mit der das Mobiltelefon der jeweiligen Personen kommuniziert, aktualisiert werden. Hierzu wird an den Steuerungscomputer jeweils ein Identifikationscode für die neue Funkzelle zusammen mit der Telefonnummer der betroffenen Person übermittelt. Der Ort der Funkzelle wird dann dem Personenprofil, welches die genannte Telefonnummer enthält, zugeordnet und abgespeichert.

Es sind auch Verfahren bekannt, mit denen der Ort, an dem sich ein Mobiltelefon befindet, enger eingrenzen läßt als lediglich auf die Größe einer Funkzelle. Hierzu werden beispielsweise die Signale des Mobiltelefons verwendet, die von mehreren Sende- und Empfangsstationen verschiedener Funkzellen empfangen werden. Zur Lokalisierung der anfragenden Person mit dem Ziel der Bestimmung des Kontaktaufnahme-Ortes sowie zur Lokalisierung der anderen an dem Verfahren beteiligten Personen mit dem Ziel der Bestimmung der jeweiligen Aufenthaltssorte können alle automatischen Verfahren zur Ortsbestimmung von Mobiltelefonen eingesetzt werden. Auch ist es möglich, mobile, satellitengestützte Positionsbestimmungsgeräte (GPS = Global Positioning System) mit dem mobilen Kommunikationsgerät zu koppeln und deren Ortsangabe an den Steuerungscomputer weiterzuleiten.

Aus verschiedenen Gründen kann es aber vorteilhaft sein, den gewünschten Kontaktaufnahme-Ort oder den Aufenthaltsort der an dem Verfahren beteiligten Personen manuell eingeben zu lassen. Zum einen kann die Kontaktanfrage-Nachricht abgesendet werden, bevor sich die anfragende Person an dem Ort befindet, an dem die Kontaktaufnahme stattfinden soll. Weiterhin kann es technische Schwierigkeiten bereiten, die Ortsinformationen der Funkzellen der digitalen Funknetze zur Durchführung des erfindungsgemäßen Verfahrens an den Steuerungscomputer zu übertragen. Durch Eingabe der Ortsangabe in das mobile Kommunikationsgerät und Versendung der Ortsangabe gemeinsam mit einer Nachricht an den Steuerungscomputer wird das erfindungsgemäße Verfahren von den Betreibern der Funknetze, welche über die Funkzelleninformation verfügen, unabhängig. Außerdem wird vermieden, daß die Aufenthaltsorte der an dem Verfahren beteiligten Personen unbefugt weitergeleitet und abgespeichert werden.

Schließlich kann ein System zur vereinfachten manuellen Ortsangabe gleichzeitig der Werbung für das erfindungsgemäße Verfahren wie auch der Werbung für Personen und Einrichtungen, die das erfindungsgemäße Verfahren unterstützen, dienen. Ähnlich den bekannten Schildern an Restaurants, Bars und ähnlichen Einrichtungen, auf denen die Annahme einer Kreditkarte angezeigt wird, können an entsprechenden Lokalen Schilder angebracht werden, welche die Teilnahme des Lokals an dem erfindungsgemäßen Verfahren anzeigen. Auf diesen Schildern können Identfikationscodes für den Ort des jeweiligen Lokals aufgedruckt sein. Der Identifikationscode ist vorzugsweise eine beliebige positive ganze Zahl. Durch das Anbringen des Schildes an einer Bar, einer Diskothek o.ä. zeigt diese Einrichtung an, daß Personen, welche das erfindungsgemäße Verfahren einsetzen wollen, in dieser Einrichtung auf Gleichgesinnte treffen. Bei einer weiten Verbreitung des erfindungsgemäßen Verfahrens kann durch ein derartiges Schild die Besucherzahl in der genannten Einrichtung erhöht werden.

Für das erfindungsgemäße Verfahren muß die anfragende Person oder die aktiv an dem Verfahren beteiligte Person lediglich den Identifikationscode, insbesondere die Nummer, eingeben, um das Restaurant, die Bar oder die Diskothek eindeutig zu identifizieren.

Wie erwähnt, wird als Antwort auf eine Kontaktanfrage-Nachricht durch den Steuerungscomputer eine bestimmte Nachricht generiert, welche Informationen über die übereinstimmenden Profile enthält. Als erstes Übereinstimmungskriterium wird in der Regel der Aufenthaltsort verwendet. Wenn keine aktiv an dem Verfahren teilnehmende Person in der Nähe des Kontaktaufnahme-Ortes der anfragenden Person ermittelt werden kann, hat die Nachricht des Steuerungscomputers an die anfragende Person lediglich den Inhalt, daß kein Kontakt vermittelt werden kann. Werden eine oder zwei Personen aufgefunden, können sofort Auszüge aus deren Personenprofile übermittelt werden. Werden mehrere Personen aufgefunden, kann als erste Nachricht die Angabe der Anzahl der ausgewählten Personen von dem Steuerungscomputer an die anfragende Person übermittelt werden. Die anfragende Person kann dann durch ein Abfragebefehl die Übermittlung der Personenprofile oder Auszüge aus den Personenprofilen der aufgefundenen Personen anfordern. Dabei kann die Fernsteuerung der Übermittlung der Personenprofile durch die anfragende Person beliebig erfolgen. Zunächst können beispielsweise Kurzprofile angefordert werden, die in einer Nachricht zusammengefaßt sind. Durch die Eingabe des Identifikationscodes einer Person, die besonders interessant ist, können weitere Details der Personenprofile angefordert werden. Auch kann durch die anfragende Person die Priorität ausgewählt werden, nach der das Personenprofil übermittelt wird.

Als erstes Auswahlkriterium kann - wie gesagt - zunächst der Aufenthaltsort verwendet werden. Das zweite Kriterium ist in der Regel das Geschlecht. Häufig wünschen anfragende Personen die Vermittlung mit einer Person des anderen Geschlechts. Je nach Personenprofil oder nach Inhalt der Anfrage kann aber auch die Vermittlung mit einer gleichgeschlechtlichen Person veranlaßt werden. Weitere Kriterien können alle Felder des Personenprofils sein, wie beispielsweise Alter, Beruf, Sprachkenntnisse, Größe, Gewicht, Haarfarbe, Freizeitinteressen etc.

Die durch den Steuerungscomputer an die anfragende Person übermittelte Folge von Personenprofilen kann dadurch unterbrochen werden, daß die anfragende Person eine Nachricht an den Steuerungscomputer sendet, welche an eine der Personen weitergeleitet werden soll, deren Personenprofile übermittelt wurden. Dieser Befehl kann beispielsweise einfach durch Angabe des Befehls "an" - gefolgt von dem Pseudonym der jeweiligen Person - an den Steuerungscomputer übermittelt werden.

Durch diese Nachricht löst die anfragende Person das Kontaktaufnahme-Verfahren aus. Auf dem mobilen Kommunikationsgerät der angesprochenen Person erscheint die von dem Steuerungscomputer weitergeleitete Nachricht. Die ausgewählte Person kann die Nachricht erwidern, indem sie an den Steuerungscomputer eine Nachricht sendet, welche einen Befehl zur Weiterleitung an die anfragende Person erhält. Wie erwähnt - kann die Anonymität aufgegeben werden, indem eine der kommunizierenden Personen ihre Kommunikationsadresse, insbesondere ihre Mobiltelefonnummer in einer der Nachrichten übermittelt.

Die Personenprofile werden vorzugsweise bei der Anmeldung zu dem erfindungsgemäßen Verfahren von den teilnehmenden Personen über das Internet an den Steuerungscomputer übermittelt. Vorzugsweise enthält ein Personenprofil ein Paßwort, wobei die Änderung eines Personenprofils nur dann möglich ist, wenn zuvor das Paßwort eingegeben und über das Internet an den Steuerungscomputer weitergeleitet wird.

Eine Ausführungsform der Erfindung sowie der Ablauf der verschiedenen Schritte zur Durchführung des Kontaktaufnahme-Verfahrens werden nachfolgend beispielhaft unter Bezugnahme auf die beigefügten Zeichnungen beschrieben.
Fig. 1 zeigt eine schematische Darstellung der bei der Durchführung des erfindungsgemäßen Verfahrens eingesetzten Geräte.
Fig. 2 zeigt ein Identifikationsschild einer gastronomischen Einrichtung, welche an dem Verfahren teilnimmt.
Fig. 3 zeigt den Vorgang der Profileingabe durch die teilnehmenden Personen über das Internet.
Fig. 4 zeigt den Vorgang der Profilverwaltung während des Ablaufs des Verfahrens.
Fig. 5 und 6 zeigen den Vorgang einer Kontaktanfrage.
Fig. 7 bis 16 zeigen die erstellten SMS-Nachrichten sowie die empfangenen SMS-Nachrichten während des Ablaufs des erfindungsgemäßen Verfahrens.

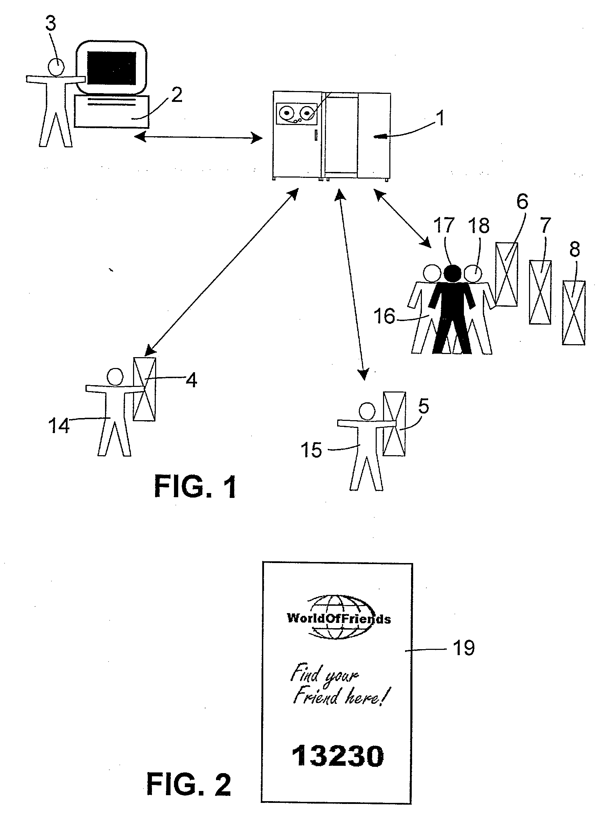

Die Fig. 1 zeigt im wesentlichen die an dem Verfahren beteiligten Personen sowie die Geräte, die zur Durchführung des erfindungsgemäßen Verfahrens verwendet werden. Das zentrale Gerät ist der Steuerungscomputer 1, der einen ausreichend großen Datenspeicher zur Aufnahme der Profildatenbank aufweisen muß und über mehrere Kommunikationsschnittstellen für den Datenaustausch über verschiedene Kommunikationsnetze verfügen muß. Ein wesentliches Kommunikationsnetz ist das Internet, über welches Personen, die an der Teilnahme an dem erfindungsgemäßen Verfahren interessiert sind, sich anmelden und ihre Personendaten übermitteln. Ein weiteres wesentliches Kommunikationsnetz ist ein Mobilfunk-Netz, über welches Nachrichten auf mobile Kommunikationsgeräte, insbesondere Mobiltelefone, übertragen werden können. Sowohl das Internet als auch mobile Telefonnetze sind aus dem Stand der Technik gut bekannt und brauchen hier nicht im Detail beschrieben zu werden.

Der Steuerungscomputer selbst muß nicht ein einziger digitaler Rechner sein sondern kann auch von einem Computernetz, sowohl von einem lokalen Netzwerk (LAN) als auch von mehreren über das Internet verbundene Computer, gebildet werden. Er kann Computer mit verschiedenen Funktionen, z.B. einen Web-Server für die Internet-Kommunikation und einen Datenbank-Server für die Datenbankverwaltung. Die Profildatenbank kann in beliebiger Form ausgebildet sein. Insbesondere kann Sie als relationale Datenbank ausgebildet sein, die mehrere Datensätze relational miteinander verbindet.

In der Fig. 1 ist oben links ein Personalcomputer (PC) 2 zu erkennen, über den eine an dem Verfahren teilnehmende Person 3 mit dem Steuerungscomputer 1 über das Internet kommuniziert, um sich zur Teilnahme an dem Verfahren anzumelden. In bekannter Weise ruft die teilnehmende Person 3 durch Eingabe eines bestimmten Internet-Domainnamens die Homepage auf, die dem erfindungsgemäßen Verfahren zugeordnet ist. Auf der Homepage findet die teilnehmende Person 3 ein Anmeldeformular sowie ein Formular mit Eingabefeldern für die verschiedenen Angaben zu den Personenprofilen. Nach vollständiger Ausfüllung der Formular werden diese als HTML-Datei an den Web-Server für das erfindungsgemäße Verfahren übertragen, der mit dem Steuerungscomputer 1 verbunden oder in diesen integriert ist. Aus den Daten in der HTML-Datei wird ein Personenprofil erzeugt und dieses als Bestandteil der Profildatenbank auf dem Speichermedium, insbesondere der Festplatte, des Steuerungscomputers 1 abgespeichert.

Zur Durchführung des erfindungsgemäßen Verfahrens muß das Personenprofil zumindest einen Identifikationscode, insbesondere einen Vornamen oder einen Phantasienamen, enthalten, über den die teilnehmende Person eindeutig identifiziert werden kann. Weitere Eintragungen in das Personenprofil sind die oben beschriebenen Eigenschaften der teilnehmenden Personen.

Mit Ausnahme der Eingabe und Änderung des Personenprofils erfolgt die weitere Kommunikation mit dem Steuerungscomputer 1 über Mobiltelefone 4 - 8, welche Personen 14 - 18, die an dem erfindungsgemäßen Verfahren teilnehmen, mit sich tragen.

Zur Durchführung des erfindungsgemäßen Kontaktaufnahmeverfahrens schickt beispielsweise die unten links in Fig. 1 dargestellte anfragende Person 14 über ihr Mobiltelefon 4 eine Kontaktanfrage-Nachricht an den Steuerungscomputer 1. Der Steuerungscomputer 1 überprüft in seiner Datenbank, ob Personen mit übereinstimmendem Profil und Aufenthaltsort zu ermitteln sind. Es wird beispielsweise davon ausgegangen, daß sich die Personen 16, 17 und 18 in dem Aufenthaltsort befinden, in dem die anfragende Person 14 eine Kontaktaufnahme wünscht. Die Person 15 ist dagegen entweder nicht in diesem Aufenthaltsort oder nicht zur Teilnahme an dem Verfahren angemeldet und wird daher bei dem Vergleich der Profile und der Orte durch den Steuerungscomputer 1 nicht ausgewählt.

Der Steuerungscomputer 1 generiert nach der Anfrage durch die Person 14 eine Antwortnachricht, welche auf das Mobiltelefon 4 der anfragenden Person 14 übermittelt wird. Die anfragende Person 14 kann somit die Personenprofile der ausgewählten Personen 16, 17, 18 empfangen und überprüfen und sich für ein Profil, beispielsweise das Profil der Person 17, entscheiden und an diese Person eine Nachricht senden. Die Nachricht sendet die anfragende Person 14 über ihr mobiles Kommunikationsgerät 4 an den Steuerungscomputer 1, der diese Nachricht dann an das Mobiltelefon 7 der ausgewählten Person 17, mit der eine Kontaktaufnahme gewünscht ist, weiterleitet.

Fig. 2 zeigt ein Hilfsmittel für das erfindungsgemäße Verfahren, nämlich ein Schild, wie es beispielsweise an Bars, Diskotheken, Clubs etc. angebracht werden kann, um deren Teilnahme an dem erfindungsgemäßen Verfahren zu signalisieren. Als Identifikationstitel für das erfindungsgemäße Verfahren wird die Angabe "World Of Friends" verwendet, welche mit einem charakteristischen Logo oben auf dem Schild aufgebracht ist. Unten befindet sich eine Nummer, welche als eindeutiger Identifikationscode für die Einrichtung verwendet wird, an der das Schild angebracht ist.

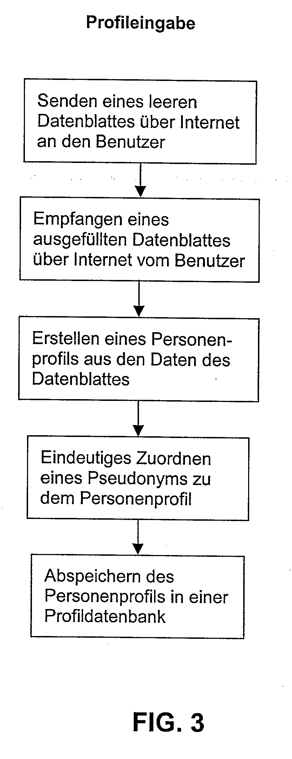

Der vollständige Ablauf des Verfahrens ist den Fig. 3 - 17 zu entnehmen. Die Fig. 3 zeigt den Vorgang der Eingabe eines Personenprofils über das Internet. Zunächst sendet - wie erwähnt - der Steuerungscomputer oder ein mit ihm verbundener Web-Server ein leeres Datenblatt über das Internet an den PC der anfragenden Person, in der Zeichnung "Benutzer" (englisch "User") genannt. Das Datenblatt wird von dem Benutzer auf seinem PC ausgefüllt und als HTML-Datei zurück an den Steuerungscomputer gesandt. Die darin eingetragenen Daten werden in ein Personenprofil umgewandelt und in der Profildatenbank auf dem Festplattenspeicher des Steuerungscomputers abgespeichert. Dabei überprüft der Steuerungscomputer 1, ob das Pseudonym, welches der Benutzer gewählt hat, für das Personenprofil eindeutig ist. Hat der Benutzer ein Pseudonym gewählt, welches bereits einem existierenden Personenprofil zugeordnet ist, sendet der Steuerungscomputer an den PC des Benutzers über das Internet eine Fehlermeldung, in der eine Aufforderung zur Eingabe eines anderen Pseudonyms enthalten ist.

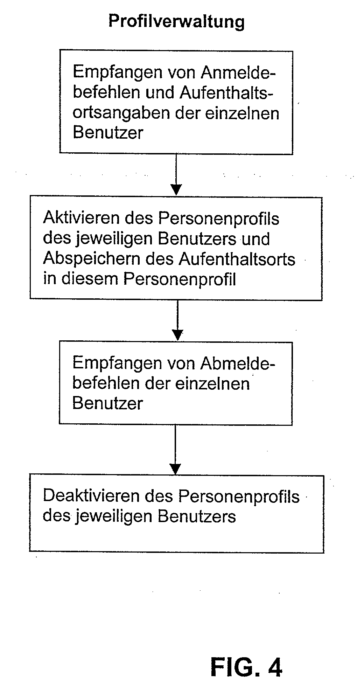

Nach der einmaligen Eingabe des Personenprofils erfolgt gemäß dem erfindungsgemäßen Verfahren eine dynamische Profilverwaltung, die in Fig. 4 dargestellt ist. Immer wenn eine Person aktiv an dem erfindungsgemäßen Verfahren teilnehmen will, sendet sie über ihr Mobiltelefon einen Aktivierungsbefehl oder Anmeldebefehl an den Steuerungscomputer 1. Zusammen mit dem Anmeldebefehl wird gleichzeitig der Aufenthaltsort des entsprechenden Benutzers an Steuerungscomputer übermittelt. Dies kann entweder durch Eingabe der Orts-Identifikationsnummer von dem Kennzeichnungsschild 19 (siehe Fig. 2) erfolgen. Alternativ kann - wie oben beschrieben - der Ort der Funkzelle, welche von dem Mobiltelefon des entsprechenden Benutzers erreicht wird, als Aufenthaltsort an den Steuerungscomputer 1 übermittelt werden. Bei entsprechender Datenkopplung zwischen dem Steuerungscomputer 1 und dem Kontrollrechner des Betreibers des Mobiltelefonnetzes kann jeweils beim Wechseln einer Funkzelle durch einen Benutzer eine entsprechende Information an den Steuerungscomputer 1 übermittelt werden, so daß in dem Personenprofil der Aufenthaltsort dieses Benutzers aktualisiert wird.

Nach dem Empfang eines Anmeldebefehls wird das entsprechende Personenprofil des Benutzers als "aktiv" markiert und bei Kontaktanfragen anderer Benutzer durch den Steuerungscomputer überprüft.

Ist eine Person nicht mehr an der Teilnahme an dem erfindungsgemäßen Verfahren interessiert, sendet sie einen Abmeldebefehl über ihr Mobiltelefon als Kurznachricht (SMS-Nachricht) an den Steuerungscomputer 1. Nach dem Empfang eines Abmeldebefehls deaktiviert der Steuerungscomputer 1 das Personenprofil des jeweiligen Benutzers. Zusätzlich kann vorgesehen werden, daß eine Aktivierung des eigenen Personenprofils jeweils nur einen gewissen Zeitraum, z.B. 24 Stunden wirksam ist. Nach Ablauf dieses Zeitraums wird das Personenprofil automatisch deaktiviert. So wird vermieden, daß Personen, die vergessen haben, sich abzumelden, weiter als aktiv in der Profildatenbank geführt werden.

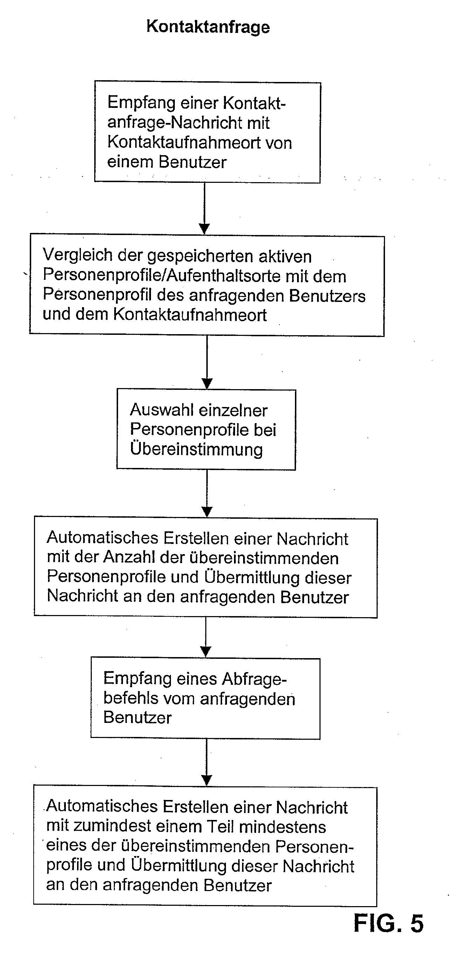

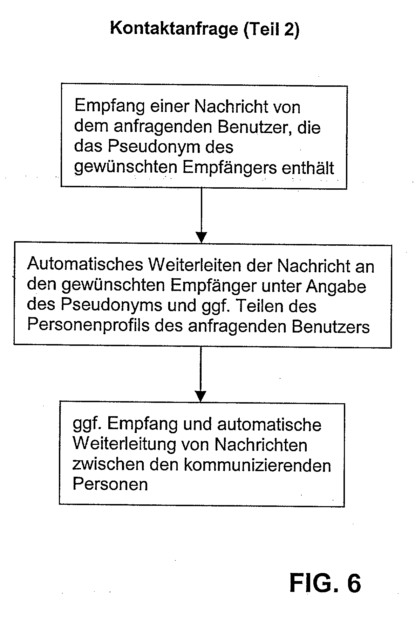

Die Fig. 5 und 6 zeigen den Ablauf einer Kontaktanbahnung gemäß dem erfindungsgemäßen Verfahren. Zunächst empfängt der Steuerungscomputer eine Kontaktanfrage-Nachricht, welche der anfragende Benutzer über sein Mobiltelefön abgesendet hat. Diese Nachricht wird entweder automatisch über die Informationen der Funkzelle oder durch manuelle Eingabe eines Ortscodes durch den Benutzer mit den Informationen über den Kontaktaufnahme-Ort an den Steuerungscomputer übermittelt.

Der Steuerungscomputer vergleicht anschließend die gespeicherten aktiven Personenprofile sowie die diesen Profilen zugeordneten Aufenthaltsorte mit dem Personenprofil des anfragenden Benutzers und dessen Kontaktaufnahme-Ort. Bei hinreichender Übereinstimmung, insbesondere bezüglich des Ortes, werden einzelne Personenprofile aus der Profildatenbank ausgewählt.

Der Steuerungscomputer erstellt nun automatisch eine Nachricht, in der die Anzahl der übereinstimmenden Personenprofile übermittelt wird. Nachdem der anfragende Benutzer auf seinem Mobiltelefon die SMS-Nachricht mit dieser Information empfangen hat, sendet er ebenfalls per SMS-Nachricht einen Abfragebefehl an den Steuerungscomputer. Dieser erstellt anschließend weitere SMS-Nachrichten, in denen die Personenprofile der ausgewählten Personen zumindest teilweise enthalten sind. Dabei werden von dem Steuerungscomputer nicht die Identität der ausgewählten Personen bzw. ihre Telefonnummern mitgeteilt.

Beim weiteren, in Fig. 6 dargestellten Ablauf der Kontaktaufnahme empfängt der Steuerungscomputer eine weitere Nachricht von dem Mobiltelefon des anfragenden Benutzers, in der als Empfängeradresse das Pseudonym eines gewünschten Empfängers, d.h. einer der ausgewählten Personen, eingetragen ist. Diese Nachricht leitet der Steuerungscomputer automatisch an den gewünschten Empfänger weiter, d.h. er bildet eine weitere SMS-Nachricht, die auf das Mobiltelefon des gewünschten Empfängers gerichtet wird. Dabei kann der Steuerungscomputer sinnvolle Informationen, insbesondere das Pseudonym der anfragenden Person dieser Nachricht, hinzufügen.

Der Vorgang der Nachrichtenvermittlung durch den Steuerungscomputer kann sich beliebig oft wiederholen, so lange die miteinander kommunizierenden Personen jeweils SMS-Nachrichten an den Steuerungscomputer senden und die Weiterleitung an die jeweils andere Person veranlassen. Wenn diese Kommunikation zur Zufriedenheit der beiden beteiligten Personen geführt wurde, können diese der anderen Person ihre Identität mitteilen und beispielsweise ihre Mobiltelefonnummer, ihren Namen oder ähnliche Informationen über den Steuerungscomputer an die andere Person übermitteln. Anschließend kann eine direkte Kontaktaufnahme erfolgen. Durch den Ortsvergleich, welchen der Steuerungscomputer durchführt, ist sichergestellt, daß sich die kommunizierenden Personen nahe beieinander befinden.

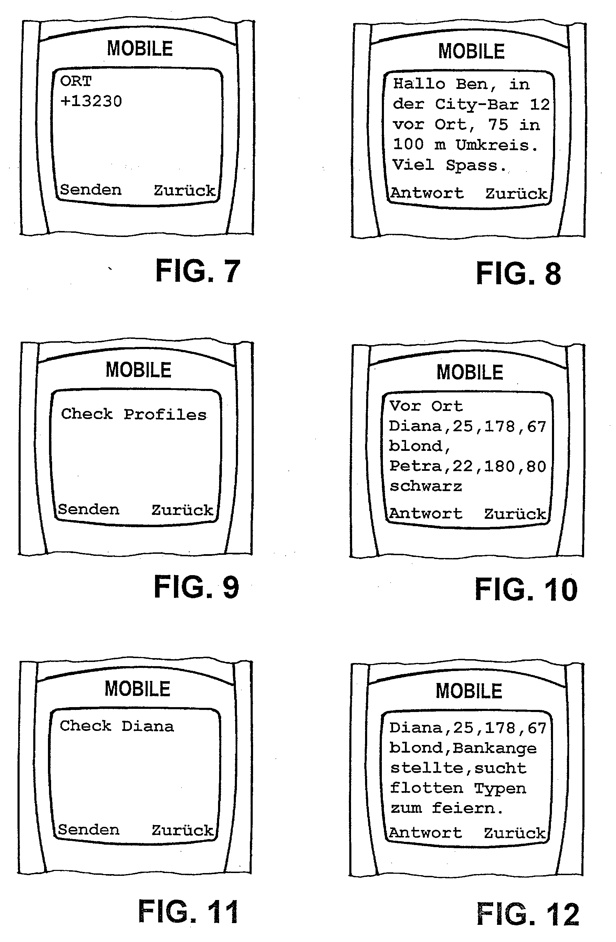

Die Fig. 7 bis 11 zeigen jeweils das Anzeigefeld, meistens ein monochromatisches LCD-Display, eines Mobiltelefons der zwei miteinander kommunizierenden Personen. Hier sind die verschiedenen SMS-Nachrichten angegeben, die zur Durchführung des erfindungsgemäßen Verfahrens erforderlich sind. Die Fig. 7 zeigt das Display des Mobiltelefons der anfragenden Person, in der die Nachricht "ORT +13230" erstellt wurde. Diese Nachricht wird zu dem Steuerungscomputer übersandt, indem die anfragende Person die Sendung an die Telefonnummer des Steuerungscomputers veranlaßt. Der Steuerungscomputer erhält mit der Nachricht in der Regel automatisch die Telefonnummer der anfragenden Person und kann dadurch das der anfragenden Person zugeordnete Personenprofil ermitteln.

Die Übermittlung der Ortsangabe in dem in Fig. 7 erkennbaren Format ist als Kontaktanfrage-Nachricht festgelegt, welche den Steuerungscomputer zur Durchführung eines Profilvergleichs veranlaßt.

Wie oben beschrieben, vergleicht der Steuerungscomputer das Profil der anhand seiner Telefonnummer identifizierten anfragenden Person mit dem Profil anderer an dem Verfahren teilnehmender Personen sowie den Kontaktaufnahmeort mit den Aufenthaltsorten der genannten Personen. Beispielsweise repräsentiert die Ortskennung "13230" eine Einrichtung namens "City-Bar". Das Pseudonym der anfragenden Person sei "Ben". Der Steuerungscomputer generiert automatisch nach dem Vergleich der Personenprofile eine Nachricht und übermittelt diese zum Mobiltelefon der anfragenden Person. Diese Nachricht ist in dem Display dieses Mobiltelefons in Fig. 8 dargestellt und gibt an, wie viele Personen sich in der City-Bar befinden und wie viele übereinstimmende Personen in dem nahen Umkreis (100 m) anwesend sind.

Die anfragende Person gibt anschließend den Befehl "Check Profiles" als SMS-Nachricht an den Steuerungscomputer (siehe Fig. 9).

Der Steuerungscomputer erzeugt dann eine Nachricht, in der Kurzauszüge der Personenprofile der ausgewählten Personen enthalten sind (Fig. 10). Diese Kurzauszüge umfassen zunächst das Pseudonym, dann das Alter, dann die Größe, dann das Gewicht und schließlich die Haarfarbe der ausgewählten Person. Die anfragende Person kann durch eine weitere SMS-Nachricht an den Steuerungscomputer die vollständige Anzeige eines Profils einer ausgewählten Person veranlassen. Wie in Fig. 11 dargestellt, wird dazu der Befehl "Check" in Verbindung mit dem Pseudonym einer der ausgewählten Personen angegeben.

Anschließend erzeugt der Steuerungscomputer eine Kurznachricht, welche den vollständigen Inhalt des Personenprofils der von der anfragenden Person gewählten Person enthält. Beispielhaft sind diese Angaben in Fig. 12 dargestellt.

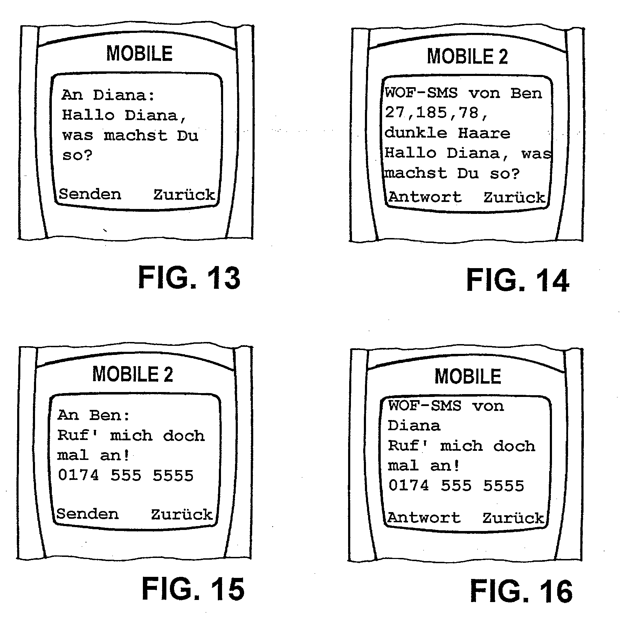

In Fig. 13 ist die Nachricht zu erkennen, die die anfragende Person namens Ben an die bestimmte ausgewählte Person mit dem Pseudonym Diana übermittelt. Der Befehl an den Steuerungscomputer zur Weiterleitung einer Nachricht lautet "An" gefolgt von einem Leerzeichen und dem Pseudonym des Nachrichtenempfängers. Ein ":" schließt den Befehl ab. Die durch die anfragende Person eingegebene Nachricht "Hallo Diana, was machst Du so?" wird durch den Steuerungscomputer in eine Kurznachricht integriert. Diese Kurznachricht wird am Anfang als Kontaktvermittlungs-Nachricht nach dem erfindungsgemäßen Verfahren (WOF-SMS) gekennzeichnet.

Ferner wird ein Auszug aus dem Personenprofil der anfragenden Person "Ben" hinzugefügt.

Die Empfängerin dieser Nachricht mit dem Pseudonym "Diana" kann selbstverständlich durch Eingabe des Befehls "Check Ben" das vollständige Profil der anfragenden Person abrufen (in den Figuren nicht dargestellt). Sie kann aber auch an Ben eine beliebige Nachricht weiterleiten, wobei diese von Diana an den Steuerungscomputer gesendet wird. In der ersten Zeile dieser Nachricht sind die Worte "An Ben:" enthalten, welche den Steuerungscomputer zur Weiterleitung dieser Nachricht veranlassen.

Die Kommunikation kann beliebig lange in diesem anonymen Verfahren über den Steuerungscomputer durchgeführt werden. Entschließt sich eine der kommunizierenden Personen dazu, die Anonymität aufzuheben, kann sie ihre Mobiltelefonnummer an die andere Person weiterleiten. Beispielsweise zeigt Fig. 16 eine von "Diana" erstellte Nachricht an "Ben", welche die Mobiltelefonnummer enthält. Fig. 17 zeigt die Nachricht in der Form, in der sie durch den Steuerungscomputer an das Mobiltelefon von "Ben" weitergeleitet wurde.

Die Kontaktaufnahme ist somit erfolgreich beendet.

### Bezugszeichenliste:

- 1: Steuerungscomputer
- 2: Personal Computer
- 3: teilnehmende Person
- 4-8: Mobiltelefon
- 14: anfragende Person
- 15: passive Person
- 16-18: ausgewählte Person
- 19: Kennzeichnungsschild

## Patentansprüche

1. Verfahren zur automatischen Erzeugung und Übermittlung von Nachrichten durch einen Steuerungscomputer, welches die folgenden Schritte aufweist:
- Aufnahme eines Personenprofils für jede an dem Verfahren beteiligte Person;
- Abspeichern der Personenprofile in einer Profildatenbank auf einem Speichermedium des Steuerungscomputers;
**gekennzeichnet durch** die folgenden Schritte:
- Übermittlung der Aufenthaltsorts-Angaben der an dem Verfahren beteiligten Personen an den Steuerungscomputer;
- Abspeichern der Ortsangaben in Verbindung mit dem jeweiligen Personenprofil auf einem Speichermedium des Steuerungscomputers;
- Übermittlung einer Kontaktanfrage-Nachricht von einem mobilen Kommunikationsgerät einer anfragenden Person an den Steuerungscomputer unter gleichzeitiger Angabe des Ortes der gewünschten Kontaktaufnahme;
- Vergleich des Personenprofils der anfragenden Person mit den abgespeicherten Personenprofilen und/oder des Kontaktaufnahme-Ortes mit den abgespeicherten Aufenthaltsorts-Angaben;
- Auswahl einer Anzahl von an dem Verfahren beteiligten Personen aus der Profildatenbank bei Übereinstimmung der Personenprofile und/oder Ortsangaben;
- Erzeugung einer Nachricht mit Informationen über die Personenprofile der ausgewählten Personen **durch** den Steuerungscomputer und
- Übermittlung dieser Nachricht von dem Steuerungscomputer an das Kommunikationsgerät der anfragenden Person.

2. Verfahren nach Anspruch 1, **dadurch gekennzeichnet, daß** das mobile Kommunikationsgerät der anfragenden Person Signale über ein in Zellen aufgeteiltes Funknetz übermittelt und daß als Kontaktaufnahme-Ort der Ort der jeweiligen Funkzelle, in der sich das Kommunikationsgerät befindet, an den Steuerungscomputer übermittelt wird.

3. Verfahren nach Anspruch 1 oder 2, **dadurch gekennzeichnet, daß** die an dem Verfahren beteiligten Personen einen Aktivierungsbefehl an den Steuerungscomputer übermitteln, wodurch ihr Personenprofil in der Profildatenbank als aktiv markiert wird und daß der Steuerungscomputer aus der Profildatenbank nur aktive Personenprofile auswählt.

4. Verfahren nach Anspruch 3, **dadurch gekennzeichnet, daß** der Aktivierungsbefehl durch ein mobiles Kommunikationsgerät übermittelt wird, welches Signale über ein in Zellen aufgeteiltes Funknetz übermittelt, und daß als Aufenthaltsort der Ort der jeweiligen Funkzelle, in der sich das Kommunikationsgerät befindet, an den Steuerungscomputer übermittelt wird.

5. Verfahren nach einem der vorangehenden Ansprüche, **dadurch gekennzeichnet, daß** verschiedenen Orten ein eindeutiger Identifikationscode zugeordnet wird und daß der mit der Kontaktanfrage-Nachricht der Identifikationscode für den gewünschten Kontaktaufnahme-Ort an den Steuerungscomputer übermittelt wird.

6. Verfahren nach Anspruch 3, **dadurch gekennzeichnet, daß** verschiedenen Orten ein eindeutiger Identifikationscode zugeordnet wird und daß gemeinsam mit dem Aktivierungsbefehl der Identifikationscode für den Aufenthaltsort an den Steuerungscomputer übermittelt wird.

7. Verfahren nach einem der vorangehenden Ansprüche, **dadurch gekennzeichnet, daß**
- die durch den Steuerungscomputer erzeugte Nachricht die Anzahl der ausgewählten Personen enthält,
- ein Abfragebefehl für die Personenprofile von dem Kommunikationsgerät der anfragenden Person an den Steuerungscomputer übermittelt wird;
- mindestens eine Nachricht durch den Steuerungscomputer erzeugt wird, die zumindest einen Teil eines Personenprofils mindestens einer der ausgewählten Personen enthält, und
- diese Nachricht an das Kommunikationsgerät der anfragenden Person übermittelt wird.

8. Verfahren nach Anspruch 7, **dadurch gekennzeichnet, daß** aufeinanderfolgend eine oder mehrere Nachrichten erzeugt werden, die zumindest einen Teil der Personenprofile der ausgewählten Personen enthalten, wobei die Reihenfolge der Nachrichten in Abhängigkeit von der Entfernung zwischen dem Kontaktaufnahme-Ort und dem Aufenthaltsort der ausgewählten Person durch den Steuerungscomputer bestimmt wird.

9. Verfahren nach Anspruch 7, **dadurch gekennzeichnet, daß** aufeinanderfolgend eine oder mehrere Nachrichten erzeugt werden, die zumindest einen Teil der Personenprofile der ausgewählten Personen enthalten, wobei die Reihenfolge der Nachrichten entsprechend dem Grad der Übereinstimmung des Personenprofils der ausgewählten Person mit dem Personenprofil der anfragenden Person durch den Steuerungscomputer bestimmt wird.

10. Verfahren nach einem der vorangehenden Ansprüche, **dadurch gekennzeichnet, daß** die anfragende Person an den Steuerungscomputer eine Nachricht gemeinsam mit einem Weiterleitungsbefehl übermittelt, der die Weiterleitung dieser Nachricht an das Kommunikationsgerät einer bestimmten Person, welche einem der ausgewählten Personenprofile entspricht, durch den Steuerungscomputer veranlaßt.

11. Verfahren nach einem der vorangehenden Ansprüche, **dadurch gekennzeichnet, daß** die Nachrichten über digitale Funktelefonnetze übermittelte Textnachrichten sind.

12. Verfahren nach Anspruch 11, **dadurch gekennzeichnet, daß** die Textnachrichten SMS-Nachrichten sind.

13. Verfahren nach einem der vorangehenden Ansprüche, **dadurch gekennzeichnet, daß** die Nachrichten Sprachnachrichten sind.

14. Verfahren nach Anspruch 13, **dadurch gekennzeichnet, daß** die Sprachnachrichten von dem Steuerungscomputer auf einen dem jeweiligen mobilen Kommunikationsgerät zugeordneten Sprachnachrichtenspeicher, insbesondere eine Voice-Mailbox, übertragen werden.

15. Verfahren nach einem der vorangehenden Ansprüche, **dadurch gekennzeichnet, daß** die Personenprofile sowie Änderungen der Personenprofile auf den Steuerungscomputer über das Internet übertragen werden.

16. Verfahren nach Anspruch 15, **dadurch gekennzeichnet, daß** jedes Personenprofil ein Paßwort umfaßt und daß Änderungen des jeweiligen Personenprofils nur nach Eingabe des Paßworts möglich sind.
